# EUROPEAN PATENT SPECIFICATION

(11) **EP 3 888 896 B1**
(45) Date of publication and mention of the grant of the patent: **14.06.2023**
(21) Application number: 21163328.4
(22) Date of filing: 18.03.2021
(51) Int. Cl.: B29D 30/06

(54) **ATTACHING DEVICE, ATTACHING SYSTEM, AND ATTACHING METHOD FOR ANNULAR MEMBER, AND TIRE**
BEFESTIGUNGSVORRICHTUNG, BEFESTIGUNGSSYSTEM UND BEFESTIGUNGSVERFAHREN FÜR RINGFÖRMIGES ELEMENT UND REIFEN
DISPOSITIF DE FIXATION, SYSTÈME DE FIXATION ET PROCÉDÉ DE FIXATION D'UN ÉLÉMENT ANNULAIRE, ET PNEUMATIQUE

(30) Priority: 03.04.2020 JP 2020067526
(43) Date of publication of application: 06.10.2021
(73) Proprietor: Sumitomo Rubber Industries, Ltd., Kobe-shi, Hyogo-ken 651-0072 (JP)
(72) Inventor: OTANI, Koji, Kobe-shi, Hyogo 651-0072 (JP)
(74) Representative: Manitz Finsterwald Patent- und Rechtsanwaltspartnerschaft mbB

(56) References cited:
- EP-A1- 2 962 875
- WO-A1-2016/088014
- KR-A- 20110 061 307
- US-A1- 2010 307 655

## Description

### BACKGROUND OF THE INVENTION

### Field of the Invention

The present invention relates to an attaching device, an attaching system, and an attaching method for attaching an annular member to the inner peripheral surface of a tire, and a tire.

### Description of the Background Art

In order to absorb and relax the resonant sound energy (vibration energy) generated in the inner cavity of a tire to suppress cavity resonance, thereby reducing road noise, a sponge material composed of a porous material may be attached to the inner peripheral surface of the tire. Japanese Laid-Open Patent Publication No. 2008-254338 discloses a production device for attaching a sponge material (sound absorbing material) to the inner peripheral surface of a tire to produce the tire.

The production device includes a plurality of inscribed shafts disposed at equal intervals on a circumference having the same diameter as the inner peripheral surface of the tire, and, by winding a long belt-shaped sponge material on the outer side of these inscribed shafts, the sponge material is formed into an annular shape. The production device moves each inscribed shaft to the radially inner side to reduce the outer diameter of the annular sponge material (hereinafter, also referred to as "annular member"), inserts the annular member into the inside of the tire, then moves each inscribed shaft to the radially outer side, and partially adheres the annular member to the inner peripheral surface of the tire. Then, the production device moves (rotates) the plurality of inscribed shafts along the inner peripheral surface of the tire, thereby adhering the entirety of the annular member to the inner peripheral surface of the tire.

In the production device disclosed in Japanese Laid-Open Patent Publication No. 2008-254338, when the plurality of inscribed shafts are moved to the radially outer side in a state where the annular member is inserted into the inside of the tire, the annular member is adhered to the inner peripheral surface of the tire partially at a plurality of portions spaced from each other in the circumferential direction by each inscribed shaft, so that the portions between the adjacent adhered portions of the annular member are separated from the inner peripheral surface of the tire. In this state, when the plurality of inscribed shafts are moved along the inner peripheral surface of the tire, the portions of the annular member separated from the inner peripheral surface are pressed in the circumferential direction by the inscribed shafts, so that wrinkles are likely to occur in the annular member. Therefore, it is difficult to uniformly attach the entirety of the annular member to the inner peripheral surface of the tire.

EP 2 962 875 A1 discloses an attaching device according to the preamble of claim 1.

An object of the present invention is to uniformly attach an annular member to the inner peripheral surface of a tire.

### SUMMARY OF THE INVENTION

(1) The present invention is directed to an attaching device for attaching an annular member to an inner peripheral surface of a tire, the attaching device including:
   a plurality of holders disposed at intervals in a circumferential direction about a predetermined axis and configured to hold an inner peripheral surface of the annular member;
   a moving mechanism configured to move the plurality of holders in a radial direction about the axis;
   a rotating mechanism configured to move the plurality of holders in the circumferential direction; and
   a control device, wherein
   the control device controls operation of the holders, the moving mechanism, and the rotating mechanism so as to perform the following operations (a) to (f) of:
      (a) holding the inner peripheral surface of the annular member by the holders;
      (b) moving the holders holding the annular member, outwardly in the radial direction toward a predetermined attaching position to attach a part of the annular member to the inner peripheral surface of the tire;
      (c) releasing the holding of the annular member by the holders;
      (d) moving the holders to a retraction position which is located inward of the attaching position in the radial direction, to separate the holders from the annular member;
      (e) moving the holders in the circumferential direction; and
      (f) moving the holders to the attaching position to attach another part of the annular member to the inner peripheral surface of the tire.

   According to the above configuration, the attaching device attaches the part of the annular member to the inner peripheral surface of the tire by the plurality of holders, separates the holders from the annular member once, shifts the positions in the circumferential direction of the holders, and attaches the other part of the annular member to the inner peripheral surface of the tire again. Accordingly, substantially the entirety of the annular member can be uniformly attached to the inner peripheral surface of the tire without occurrence of wrinkles in the annular member.
(2) Preferably, the control device controls the operation of the rotating mechanism so as to move the holders in the circumferential direction with the annular member pressed against the inner peripheral surface of the tire by the holders after the operation (f).
   Due to such a configuration, , the entire circumference of the annular member can be attached to the inner peripheral surface of the tire without being separated therefrom.
(3) Preferably, each of the holders includes a holding member configured to hold the annular member, and a roller capable of rolling on the inner peripheral surface of the annular member.
   According to this configuration, when moving the holders in the circumferential direction with the annular member pressed against the inner peripheral surface of the tire by the holders, the roller can be caused to roll on the inner peripheral surface of the annular member, and thus the resistance to movement of the holders can be reduced.
(4) Preferably, the retraction position includes a first retraction position at which the annular member held by the holders is contracted to be smaller than an inner diameter of the tire, and a second retraction position which is located between the first retraction position and the attaching position in the radial direction and at which the holders are separated from the annular member attached to the inner peripheral surface of the tire.
   With such a configuration, the cycle time from the operation (b) of attaching the part of the annular member to the inner peripheral surface of the tire to the operation (f) of attaching the other part of the annular member to the inner peripheral surface of the tire again after moving the holders in the circumferential direction can be shortened.
(5) Preferably, the moving mechanism includes a pair of link mechanisms each including: a cylinder disposed on the axis and configured to extend and contract in an axial direction along the axis; and link members each coupled at one end thereof to the cylinder and coupled at another end thereof to the holder, and the pair of link mechanisms are provided on both sides in the axial direction of the holders.
   According to this configuration, the holders can be moved in the radial direction by extension and contraction of the cylinders in the pair of link mechanisms without changing the positions in the axial direction of the holders. Thus, the holders can be smoothly moved toward the inner peripheral surface of the tire when moving the holders from the retraction position to the attaching position.
(6) The present invention is directed to an attaching system for attaching an annular member to an inner peripheral surface of a tire, the attaching system including:
   an attaching device configured to form a long belt-shaped member into the annular member and attach the annular member to the inner peripheral surface of the tire;
   a first supply device configured to supply the long belt-shaped member to the attaching device; and
   a second supply device configured to supply the tire to the attaching device.

   With such a configuration, the work from forming the annular member to attaching the annular member to the tire can be performed through one continuous operation.
(7) Preferably, the attaching device and the second supply device are disposed adjacent to each other in a first direction along an axial direction of the annular member formed by the attaching device, and
   the attaching device and the first supply device are disposed adjacent to each other along a second direction orthogonal to the first direction.
   With such a configuration, a worker can smoothly move between the first supply device and the attaching device and between the attaching device and the second supply device.
(8) The present invention is directed to an attaching method for an annular member, for attaching the annular member to an inner peripheral surface of a tire, the attaching method including the following steps (a) to (f) of:
   (a) holding an inner peripheral surface of the annular member by a plurality of holders disposed at intervals in a circumferential direction about a predetermined axis;
   (b) moving the holders holding the annular member, outwardly in a radial direction about the axis toward a predetermined attaching position to attach a part of the annular member to the inner peripheral surface of the tire;
   (c) releasing the holding of the annular member by the holders;
   (d) moving the holders to a retraction position which is located inward of the attaching position in the radial direction, to separate the holders from the annular member;
   (e) moving the holders in the circumferential direction; and
   (f) moving the holders to the attaching position to attach another part of the annular member to the inner peripheral surface of the tire.

   With the above attaching method, the part of the annular member is attached to the inner peripheral surface of the tire by the plurality of holders, the holders are separated from the annular member once, the positions in the circumferential direction of the holders are shifted, and the other part of the annular member is attached to the inner peripheral surface of the tire again. Accordingly, substantially the entirety of the annular member can be uniformly attached to the inner peripheral surface of the tire without occurrence of wrinkles in the annular member.
(9) Preferably, the attaching method further includes a step of moving the holders in the circumferential direction with the annular member pressed against the inner peripheral surface of the tire by the holders after the step (f).
   With such a configuration, the entirety of the annular member can be attached to the inner peripheral surface of the tire without being separated therefrom.
(10) Preferably, the attaching method further includes a step of applying a sealant material for adhering the annular member, to the inner peripheral surface of the tire before the step (b).

With such a configuration, the annular member can be attached to the inner peripheral surface of the tire using the sealant material for preventing a puncture in the tire as an adhesive.

According to the present invention, it is possible to uniformly attach an annular member to the inner peripheral surface of a tire.

### BRIEF DESCRIPTION OF THE DRAWINGS

FIG. 1 is a cross-sectional view showing an example of a tire;
FIG. 2 is a schematic plan view of an attaching system for an annular member according to an embodiment of the present invention;
FIG. 3 is a side view showing a first supply device and an attaching device in the attaching system;
FIGS. 4(a) and 4(b) are a plan view and a side view of the attaching device, respectively;
FIGS. 5(a) and 5(b) are a plan view and a side view of the attaching device, respectively;
FIGS. 6(a) and 6(b) are a perspective view and a side view of a holder, respectively;
FIGS. 7(a) and 7(b) are schematic front views of the holder;
FIGS. 8(a) to 8(c) are explanatory diagrams showing a procedure for forming the annular member;
FIGS. 9(a) to 9(c) are explanatory diagrams showing a joint portion of the annular member;
FIG. 10 is a schematic cross-sectional view of a second supply device as viewed from the front side;
FIGS. 11(a) to 11(c) are explanatory diagrams as viewed from the upper surface side, showing a procedure for setting a tire to the second supply device;
FIGS. 12(a) and 12(b) are explanatory diagrams as viewed from the upper surface side, showing a procedure for attaching the annular member to the tire;
FIGS. 13(a) and 13(b) are explanatory diagrams as viewed from the upper surface side, showing the procedure for attaching the annular member to the tire;
FIGS. 14(a) to 14(c) are explanatory diagrams as viewed from the side surface side, showing the procedure for attaching the annular member to the tire;
FIGS. 15(a) to 15(c) are explanatory diagrams as viewed from the side surface side, showing the procedure for attaching the annular member to the tire;
FIG. 16 is a cross-sectional view showing a modification of the tire; and
FIGS. 17(a) and 17(b) are schematic front views showing modifications of the holder.

### DESCRIPTION OF THE PREFERRED EMBODIMENTS

Hereinafter, an embodiment of the present invention will be described in detail with reference to the drawings.

### [Configuration of Tire]

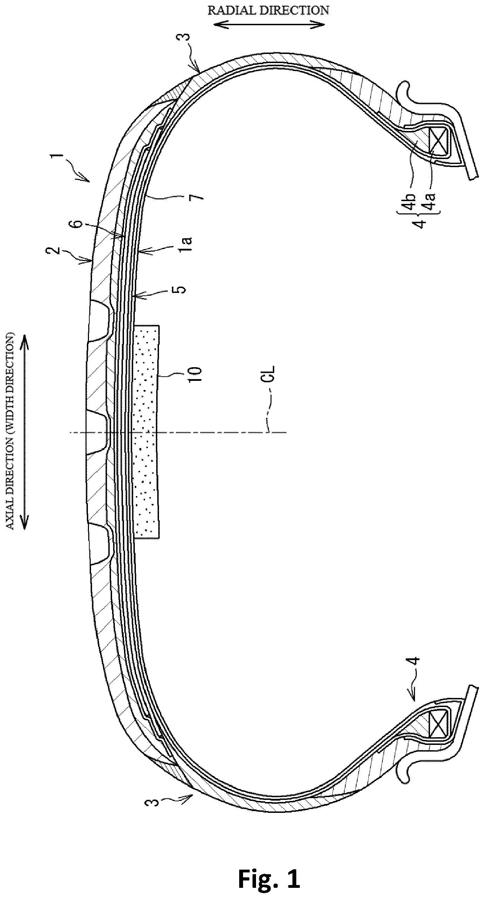

FIG. 1 is a cross-sectional view showing an example of a tire.

In FIG. 1, a tire 1 includes a tread 2, a pair of sidewalls 3, a pair of beads 4, a carcass 5, a belt 6, an inner liner 7, etc. The tread 2 is formed from a crosslinked rubber, and comes into contact with a road surface at the outer surface thereof. The pair of sidewalls 3 are formed from a crosslinked rubber, and extend from both ends in the axial direction of the tread 2 inwardly in the tire radial direction. The bead 4 is located radially inward of the sidewalls 3 and includes a core 4a and an apex 4b.

The carcass 5 is located inward of the tread 2 and the sidewalls 3 and extends on and between one bead 4 and the other bead 4. The belt 6 is located between the tread 2 and the carcass 5. The inner liner 7 is located inward of the carcass 5. The inner liner 7 is formed from a crosslinked rubber having an excellent air blocking property, and forms an inner surface of the tire 1. In the present description, an "inner peripheral surface 1a of the tire 1" refers to the inner peripheral surface of the inner liner 7 on the radially inner side of the tread 2. The "inner diameter of the tire 1" refers to an inner diameter (bead inner diameter) at a bead 4 portion.

An annular member 10 is attached to the inner peripheral surface 1a of the tire 1. The annular member 10 is formed in an annular shape by joining both end portions of a long belt-shaped sponge material to each other. The sponge material is formed of a porous material having open cells or closed cells obtained by foaming a rubber or synthetic resin. The sponge material has vibration-isolating or sound-absorbing properties, and absorbs and relaxes the resonant sound energy (vibration energy) generated inside the tire 1, thereby suppressing cavity resonance to reduce road noise. Hereinafter, the long belt-shaped sponge material to be formed in an annular shape is also referred to as "long belt-shaped member".

### [Configuration of Attaching System]

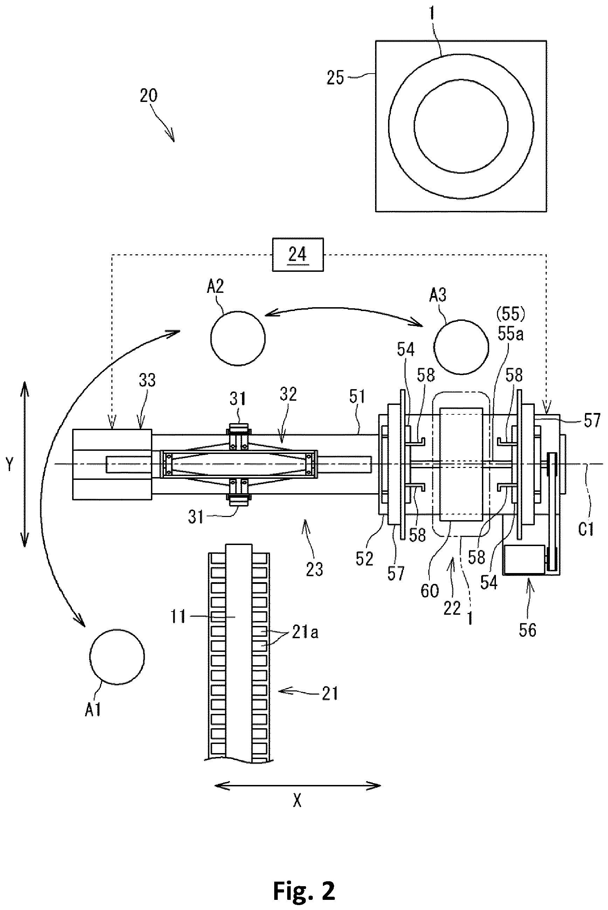

FIG. 2 is a schematic plan view of an attaching system 20 for a long belt-shaped member 11 according to an embodiment of the present invention.

The attaching system 20 according to the present embodiment includes an attaching device 23, a first supply device 21, a second supply device 22, and a control device 24. The attaching device 23 has a function of forming the long belt-shaped member 11 into an annular shape (a forming function for the annular member 10), and a function of attaching the annular member 10 formed in an annular shape to the inner peripheral surface 1a of the tire 1 (attaching function). Therefore, in the following description, the attaching device 23 is sometimes referred to as "forming device 23". The first supply device 21 supplies the long belt-shaped member 11 to the attaching device 23. The second supply device 22 supplies the tire 1 to the attaching device 23.

The control device 24 controls the operation of the attaching device 23, the first supply device 21, and the second supply device 22. The control device 24 includes, for example, a calculation unit such as a CPU, and a storage unit such as a RAM and a ROM, and performs a predetermined function when the calculation unit executes a program installed in the storage unit. The control device 24 receives signals from various sensors and switches, and controls the operation of motors and actuators provided in the attaching device 23, the first supply device 21, the second supply device 22, etc., on the basis of the received signals, etc.

The attaching device 23 and the second supply device 22 are disposed adjacent to each other in a horizontal first direction X. The attaching device 23 is disposed such that the axis (center) of the annular member 10 formed by the attaching device 23 extends along the first direction X. The second supply device 22 is disposed such that the axis of the tire 1 supported by the second supply device 22 extends along the first direction X. The axis of the annular member 10 formed by the attaching device 23 coincides with the axis of the tire 1 supported by the second supply device 22. Hereinafter, these axes are denoted by reference character C1.

The attaching device 23 and the first supply device 21 are disposed adjacent to each other in a horizontal second direction Y. The second direction Y is orthogonal to the first direction X. The first supply device 21 supports the long belt-shaped member 11 such that the longitudinal direction of the long belt-shaped member 11 coincides with the second direction Y, and supplies the long belt-shaped member 11 toward the attaching device 23 in the second direction Y.

### [First Supply Device 21]

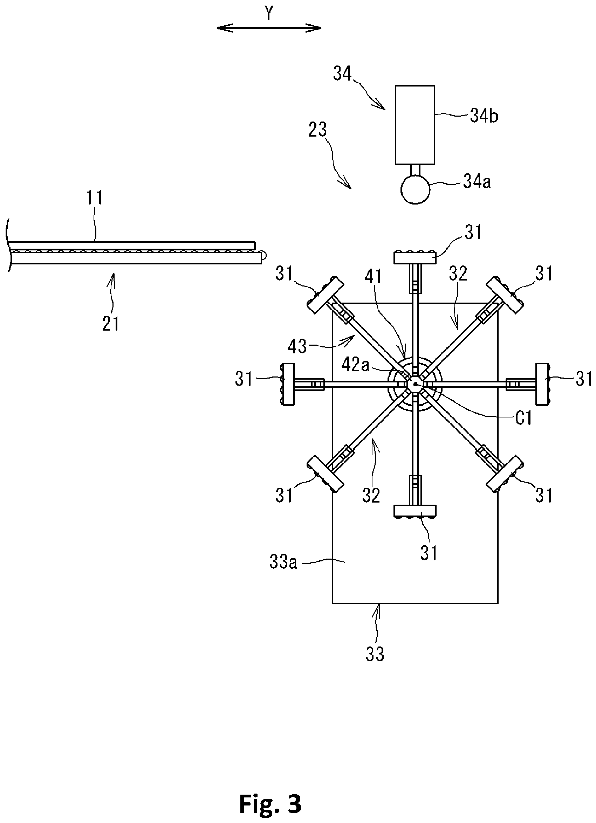

FIG. 3 is a side view showing the first supply device 21 and the attaching device 23 in the attaching system 20.

As shown in FIG. 2 and FIG. 3, the first supply device 21 is composed of a roller conveyor disposed horizontally along the second direction Y. Rollers 21a of the first supply device 21 are composed of free rollers, and the long belt-shaped member 11 on the first supply device 21 is supplied to the attaching device 23 by holders 31 of the later-described attaching device 23 pulling the long belt-shaped member 11. The first supply device 21 is disposed at a height corresponding to the later-described holder 31 located at the highest position. The rollers 21a of the first supply device 21 may be composed of drive rollers, or a combination of free rollers and drive rollers. In this case, the first supply device 21 itself can move the long belt-shaped member 11 toward the attaching device 23. The first supply device 21 may be composed of a belt conveyor. The first supply device 21 may be composed of a reel on which the long belt-shaped member 11 is wound.

### [Attaching Device 23]

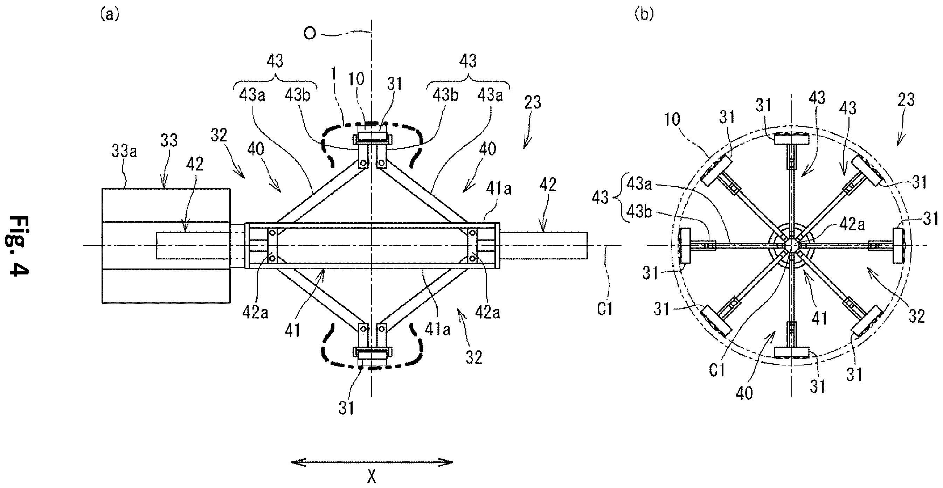

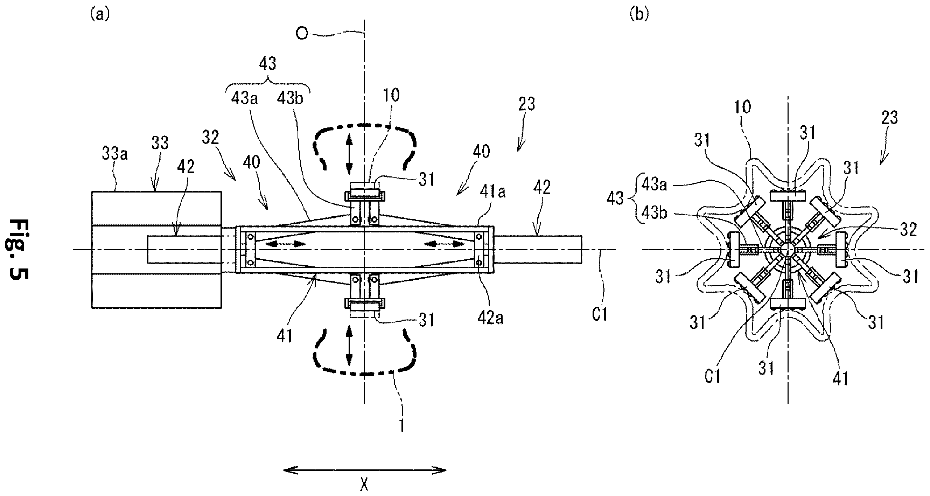

FIGS. 4(a) and 5(a) are plan views of the attaching device 23, and FIGS. 4(b) and 5(b) are side views of the attaching device 23.

As shown in FIG. 3 to FIG. 5(b), the attaching device 23 includes a plurality of holders 31, a moving mechanism 32, a rotating mechanism 33, and a pressing mechanism 34. The plurality of holders 31 are disposed at equal intervals around the axis C1 along the first direction X. The attaching device 23 according to the present embodiment includes eight holders 31.

### (Holders 31)

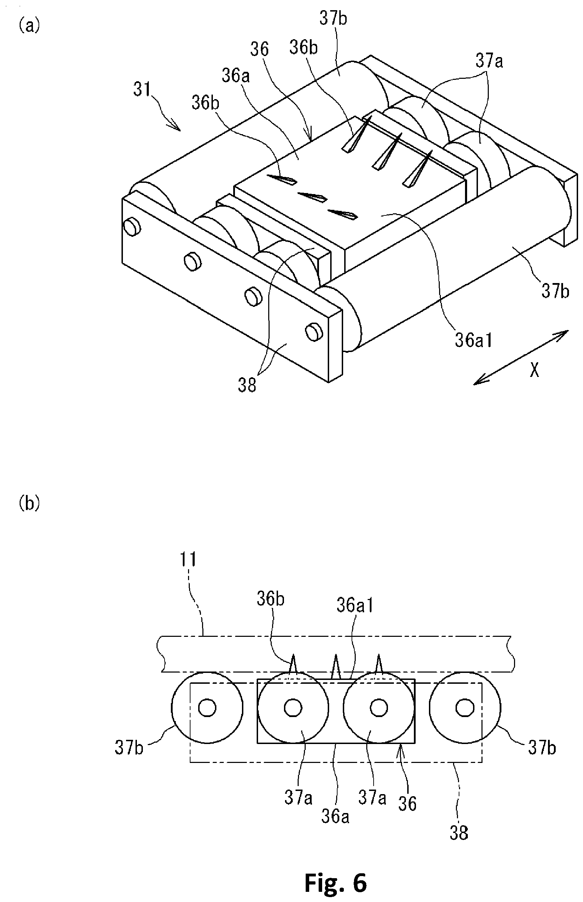

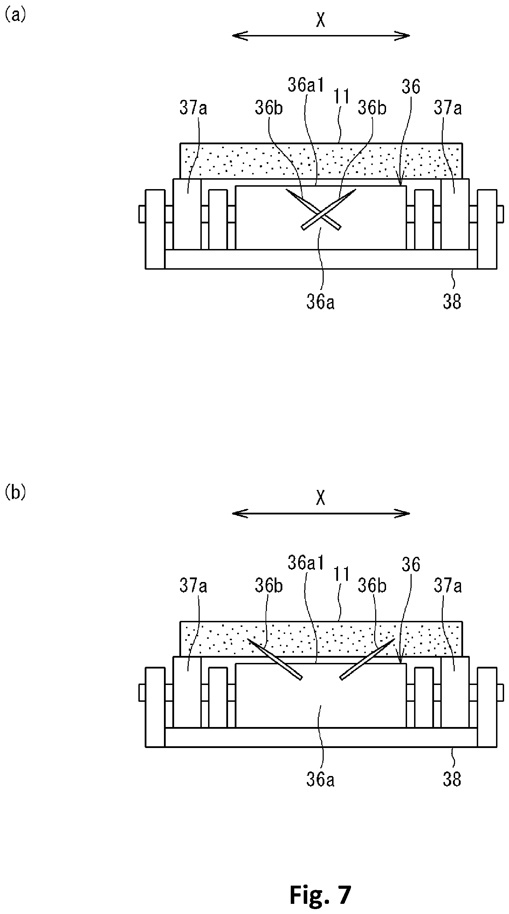

FIGS. 6(a) and 6(b) are a perspective view and a side view of the holder 31. FIGS. 7(a) and 7(b) are schematic front views of the holder 31.

Each holder 31 includes a holding member 36, rollers 37a and 37b, and a support frame 38.

The holding member 36 holds one surface (lower surface) of the long belt-shaped member 11 or the inner peripheral surface of the annular member 10. The holding member 36 according to the present embodiment includes a casing 36a and a plurality of needles 36b provided so as to be able to advance from and retract into the casing 36a. The casing 36a is formed in a rectangular parallelepiped box shape and supported by the support frame 38. An actuator (not shown) such as an air cylinder for causing the needles 36b to advance from and retract into the casing 36a is included in the casing 36a.

Each needle 36b protrudes from an upper surface (holding surface) 36a1 of the casing 36a and retracts below the upper surface 36a1. The plurality of needles 36b are disposed in two rows in the first direction X. A plurality of needles 36b in each row are provided so as to be inclined in the same direction relative to the holding surface 36a1 of the casing 36a. The needles 36b in one row and the needles 36b in the other row are inclined in directions opposite to each other, cross each other when retracting in the casing 36a, and become separated from each other when protruding from the casing 36a. The holding member 36 holds the long belt-shaped member 11 by diagonally piercing the long belt-shaped member 11 with the needles 36b. Since the holding member 36 holds the long belt-shaped member 11 by piercing the long belt-shaped member 11 with the needles 36b, it is possible for the holding member 36 to hold even a sponge material for which a vacuum type holder cannot be used. As the holding member 36, a known device such as a needle gripper (SNG-M) manufactured by Schmalz K.K. can be used.

The rollers 37a and 37b include first rollers 37a and second rollers 37b. The first rollers 37a are adjacently disposed on both sides of the casing 36a in the first direction X. Two first rollers 37a are provided on each side in the first direction X of the holding member 36. The first rollers 37a are provided to the support frame 38 so as to be rotatable about axes extending along the first direction X.

The second rollers 37b are disposed on both sides of the casing 36a in a direction orthogonal to the first direction X. The second rollers 37b are provided to the support frame 38 so as to be rotatable about axes extending along the first direction X. The second rollers 37b are formed so as to be longer in the first direction X than the first rollers 37a. Specifically, each second roller 37b has a length extending over the holding member 36 and the first roller 37a in the first direction X. Due to the above, the holding member 36 is surrounded by the first and second rollers 37a and 37b.

The first rollers 37a and the second rollers 37b roll on the inner peripheral surface of the annular member 10 attached to the inner peripheral surface 1a of the tire 1 as described later. The first rollers 37a and the second rollers 37b protrude above the holding surface 36a1 of the holding member 36. Therefore, the first rollers 37a and the second rollers 37b are allowed to roll on the inner peripheral surface of the annular member 10 in a state where the holding surface 36a1 is not in contact with the inner peripheral surface of the annular member 10.

### (Moving Mechanism 32)

As shown in FIG. 3 to FIG. 5(b), the moving mechanism 32 includes a pair of link mechanisms 40 and a support frame 41 which supports the pair of link mechanisms 40. The pair of link mechanisms 40 are disposed on both sides of the holders 31 in the first direction X. Each link mechanism 40 includes a cylinder 42 and link members 43. The cylinder 42 is composed of an electric cylinder, a fluid pressure cylinder, or the like. The cylinder 42 is disposed along the first direction X and extends and contracts in the same direction X. A main body portion of the cylinder 42 is fixed to the support frame 41. A rod portion of the cylinder 42 is movable in the first direction X. A leading end 42a of the rod portion is guided by a guide 41a provided in the support frame 41.

Each link member 43 includes a first link member 43a having an end rotatably connected to the leading end 42a of the cylinder 42. The other end of the first link member 43a is rotatably connected to one end of a second link member 43b. The other end of the second link member 43b is fixed to the holder 31.

The link mechanism 40 disposed on one side of the holder 31 in the first direction X and the link mechanism 40 disposed on the other side of the holder 31 in the first direction X are disposed symmetrically with respect to a center line O of the holders 31 in the first direction X. The cylinders 42 of the pair of link mechanisms 40 extend and contract in synchronization with each other. When both cylinders 42 extend, each holder 31 moves radially outward as shown in FIGS. 4(a) and 4(b). When both cylinders 42 contract, each holder 31 moves radially inward as shown in FIGS. 5(a) and 5(b). At this time, each holder 31 moves in the radial direction without changing its position in the first direction X.

Hereinafter, the position of each holder 31 shown in FIGS. 4(a) and 4(b) is also referred to as "forming position" or "attaching position", and the position of each holder 31 shown in FIGS. 5(a) and 5(b) is also referred to as "first retraction position". In addition, as will be described later, the moving mechanism 32 according to the present embodiment can locate each holder 31 at a "second retraction position" located between the forming position and the first retraction position.

The cylinder 42 in each link mechanism 40 may have a configuration in which the main body portion thereof is disposed in the support frame 41 and the rod portion thereof protrudes from the main body portion to the axially outer side. However, in this case, a space for accommodating the main body portion of the cylinder 42 is required in the support frame 41, and the outer diameter of the support frame 41 is increased accordingly. Thus, as will be described later, it becomes difficult to insert the annular member 10 into the inside of the tire 1, and it may be impossible to use the annular member 10 for the tire 1 having a particularly small diameter. Therefore, use of the configuration in which the main body portion of the cylinder 42 is disposed axially outward of the support frame 41 and the rod portion of the cylinder 42 protrudes from the main body portion to the axially inner side (the holders 31 side) as in the present embodiment, is suitable for reducing the size of the support frame 41.

### (Rotating Mechanism 33)

As shown in FIG. 3 to FIG. 5(b), the rotating mechanism 33 rotates the holders 31 and the moving mechanism 32 about the axis C1. The rotating mechanism 33 includes a housing 33a which rotatably supports the support frame 41 of the moving mechanism 32. Within the housing 33a, a drive unit such as a motor and a power transmission mechanism for rotating the support frame 41 is provided.

### (Pressing Mechanism 34)

As shown in FIG. 3, the pressing mechanism 34 is disposed above the holder 31 that is located at the highest position. The pressing mechanism 34 includes a pressing member 34a and an actuator 34b. The pressing member 34a is composed of, for example, a roller that rotates about an axis extending along the first direction X. The actuator 34b is composed of a cylinder that extends and contracts in the up-down direction. As the cylinder, a fluid pressure cylinder, an electric cylinder, or the like can be used. The pressing member 34a is provided at the lower end of the actuator 34b, and moves up and down by extension and contraction of the actuator 34b. When the pressing member 34a moves downward, the pressing member 34a presses the long belt-shaped member 11 positioned on the highest holder 31 from above.

### [Procedure for Forming Annular Member 10]

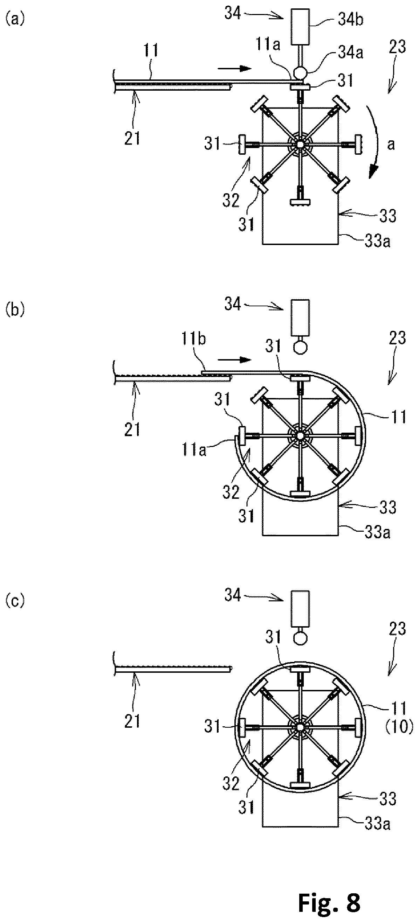

FIGS. 8(a) to 8(c) are explanatory diagrams showing a procedure for forming the annular member 10.

Hereinafter, a procedure for forming the annular member 10 using the first supply device 21 and the attaching device 23 will be described. The operation of the attaching device 23 in the following description is under the control of the control device 24.

To form the annular member 10, first, as shown in FIG. 8(a), a worker pulls out the long belt-shaped member 11 on the first supply device 21 toward the attaching device 23 side, and positions a leading end portion 11a of the long belt-shaped member 11 on the highest holder 31 that is at the forming position. Thereafter, the leading end portion 11a of the long belt-shaped member 11 is pressed on the holder 31 by the pressing member 34a in the pressing mechanism 34, and the needles 36b (see FIGS. 7(a) and 7(b)) of the holding member 36 are caused to protrude to pierce the long belt-shaped member 11. Accordingly, the leading end portion 11a of the long belt-shaped member 11 is held by the highest holder 31.

Next, the plurality of holders 31 are rotated in the direction of an arrow a by the rotating mechanism 33 of the attaching device 23, and the long belt-shaped member 11 is held by the holders 31 sequentially positioned at the highest position. The rotating mechanism 33 temporarily stops each time each holder 31 is positioned at the highest position. In a state where the rotating mechanism 33 has stopped, the holder 31 causes the needles 36b of the holding member 36 to protrude to pierce the long belt-shaped member 11. Therefore, the holder 31 can hold the long belt-shaped member 11 in a stable state.

The pressing mechanism 34 raises and retracts the pressing member 34a except when holding the leading end portion 1 1a of the long belt-shaped member 11 by the holder 31. This is because, by winding the long belt-shaped member 11 on the outer peripheral side of the plurality of holders 31, the long belt-shaped member 11 is naturally pressed on the highest holder 31. However, each time each holder 31 is positioned at the highest position, the pressing member 34a may be lowered to press the long belt-shaped member 11.

When the holder 31 that was at the highest position at the first is positioned at the highest position again, a terminal end portion 11b of the long belt-shaped member 11 is positioned on this holder 31. The leading end portion 11a and the terminal end portion 11b of the long belt-shaped member 11 are joined to each other with an adhesive by the worker, whereby the long belt-shaped member 11 is formed into the annular member 10.

After the annular member 10 is formed, the moving mechanism 32 moves the plurality of holders 31 to the first retraction position on the radially inner side (see FIGS. 5(a) and 5(b)). Accordingly, the annular member 10 contracts, so that the outer diameter thereof is reduced to be smaller than the inner diameter of the tire 1 and the shape of the annular member 10 becomes a shape that allows the annular member 10 to be inserted into the inside of the tire 1.

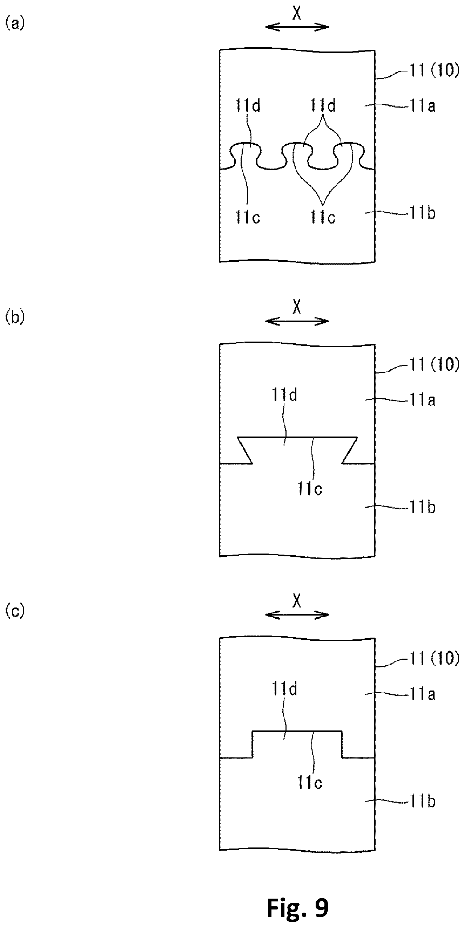

FIGS. 9(a) to 9(c) are explanatory diagrams showing a joint portion of the annular member 10.

The leading end portion 11a and the terminal end portion 11b of the long belt-shaped member 11 can be formed in shapes shown in FIGS. 9(a) to 9(c). In the example shown in FIG. 9(a), a plurality of recesses 11c are formed on one of the leading end portion 11a and the terminal end portion 11b of the long belt-shaped member 11, and a plurality of projections 11d are formed on the other of the leading end portion 11a and the terminal end portion 11b. The shapes of the plurality of recesses 11c are the same, and the shapes of the plurality of projections 11d are the same. The recesses 11c and the projections 11d formed on the leading end portion 11a and the terminal end portion 11b of the long belt-shaped member 11 are fitted to each other.

By fitting the recesses 11c and the projections 11d to each other, the leading end portion 11a and the terminal end portion 11b of the long belt-shaped member 11 are inhibited from being displaced from each other in the axial direction (first direction X). In addition, the side surfaces on both sides in the axial direction of each recess 11c and the side surfaces on both sides in the axial direction of each projection 11d are inclined relative to the circumferential direction. When the recesses 11c and the projections 11d are fitted to each other, the side surfaces in the axial direction of the recesses 11c and the projections 1 1d are brought into contact with each other, whereby the leading end portion 11a and the terminal end portion 11b of the long belt-shaped member 11 are inhibited from being separated from each other in the circumferential direction. The recesses 11c and the projections 11d each have a curved shape as a whole and have no angular portion. Thus, stress concentration is less likely to occur, and damage to the recesses 11c and the projections 11d can be suppressed. Moreover, by forming the recesses 11c and the projections 11d on the leading end portion 11a and the terminal end portion 11b of the long belt-shaped member 11, the adhesive area between the leading end portion 11a and the terminal end portion 11b can be increased, so that the leading end portion 11a and the terminal end portion 11b can be more firmly adhered to each other.

In the example shown in FIG. 9(b), one recess 11c is formed on one of the leading end portion 11a and the terminal end portion 11b of the long belt-shaped member 11, and one projection 11d is formed on the other of the leading end portion 11a and the terminal end portion 11b. The side surfaces on both sides in the axial direction of the recess 11c and the side surfaces on both sides in the axial direction of the projection 1 1d are inclined relative to the circumferential direction. When the recess 11c and the projection 11d are fitted to each other, the side surfaces in the axial direction of the recess 11c and the projection 11d are brought into contact with each other, whereby the leading end portion 11a and the terminal end portion 11b are inhibited from being displaced from each other in the axial direction and separated from each other in the circumferential direction. The structures of the recess 11c and the projection 11d of this example are simpler than those shown in FIG. 9(a), but the adhesive area is slightly decreased. In addition, the outer shape of each of the recess 11c and the projection 11d is formed by a combination of straight lines, and the shape changes rapidly, so that damage due to stress concentration is likely to occur. Therefore, in these respects, the example shown in FIG. 9(a) is more advantageous.

In the example shown in FIG. 9(c), one recess 11c is formed on one of the leading end portion 11a and the terminal end portion 11b of the long belt-shaped member 11, and one projection 11d is formed on the other of the leading end portion 11a and the terminal end portion 11b. The side surfaces on both sides in the axial direction of the recess 11c and the side surfaces on both sides in the axial direction of the projection 11d are located along the circumferential direction. When the recess 11c and the projection 11d are fitted to each other, the side surfaces in the axial direction of the recess 11c and the projection 11d are brought into contact with each other, whereby the leading end portion 11a and the terminal end portion 11b are inhibited from being displaced from each other in the axial direction. However, the leading end portion 11a and the terminal end portion 11b are not inhibited from being separated from each other in the circumferential direction. In addition, the structures of the recess 11c and the projection 11d of this example are simple similar to those shown in FIG. 9(b), but the adhesive area is slightly decreased, and, due to the rapid change in shape, damage due to stress concentration is likely to occur. Therefore, in these respects, the example shown in FIG. 9(a) is more advantageous.

### [Second Supply Device 22]

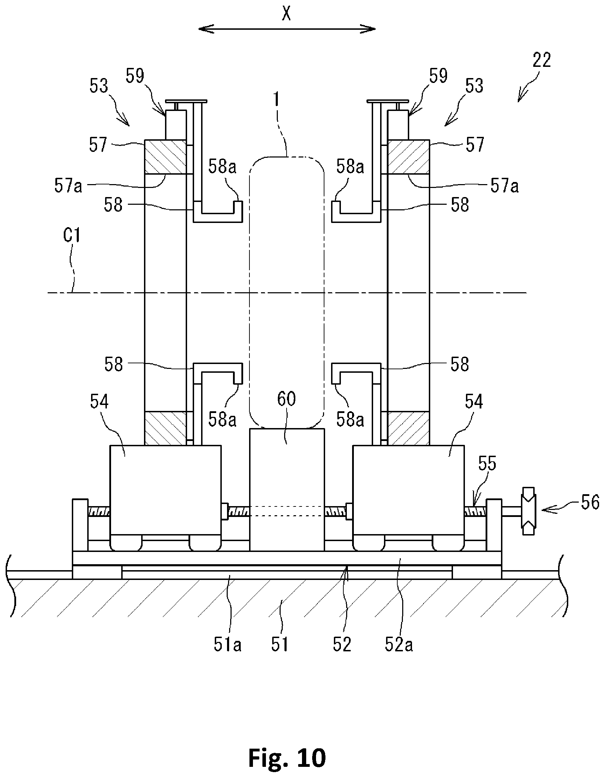

FIG. 10 is a schematic cross-sectional view of the second supply device 22 as viewed from the front side.

As shown in FIG. 2 and FIG. 10, the second supply device 22 includes a base member 51, a movable frame 52, and a grasping mechanism 53. A first guide rail 51a extending along the first direction X is provided on the base member 51. The movable frame 52 moves along the first guide rail 51a of the base member 51. The movable frame 52 is driven by a drive unit which is not shown. A second guide rail 52a extending along the first direction X is provided on the movable frame 52.

The grasping mechanism 53 includes a pair of mobile bases 54, a connector 55 which connects the pair of mobile bases 54, and a drive unit 56. The pair of mobile bases 54 move along the second guide rail 52a. The connector 55 includes a screw shaft 55a extending along the first direction X. The screw shaft 55a is rotationally driven by the drive unit 56 (see FIG. 2) composed of a motor, a belt conduction mechanism, or the like. On the screw shaft 55a, threads which are opposite to each other are formed on both sides in the axial direction, and the pair of mobile bases 54 are screwed to the respective threads.

When the screw shaft 55a rotates in one direction, the pair of mobile bases 54 move in directions in which the mobile bases 54 come closer to each other. When the screw shaft 55a rotates in the other direction, the pair of mobile bases 54 move in directions in which the mobile bases 54 move away from each other.

The grasping mechanism 53 includes a grasping frame 57 provided to each of the pair of mobile bases 54. An opening 57a is formed in a center portion of the grasping frame 57. A plurality of grasping members 58 are disposed on the grasping frame 57 at intervals around the axis C1 extending along the first direction X. Each grasping member 58 is provided on the grasping frame 57 so as to be movable in the radial direction about the axis C1. Each grasping member 58 moves in the radial direction by a drive unit 59 such as a fluid pressure cylinder, so as to come closer to or move away from each other. Each grasping member 58 includes a claw portion 58a protruding along the first direction X, and grasps the tire 1 with the claw portion 58a.

A placement table 60 for placing the tire 1 thereon is provided on the movable frame 52 of the second supply device 22. The pair of mobile bases 54 of the grasping mechanism 53 move closer to or away from the tire 1 placed on the placement table 60. The grasping members 58 of the grasping mechanism 53 are inserted into the inside of the tire 1 placed on the placement table 60, and grasp the tire 1.

### [Procedure for Attaching Annular Member 10]

### (Basic Procedure)

Next, a basic procedure for operation of attaching the annular member 10 to the tire 1 will be described in detail. In the following description, the operation of the second supply device 22 and the attaching device 23 is controlled by the control device 24.

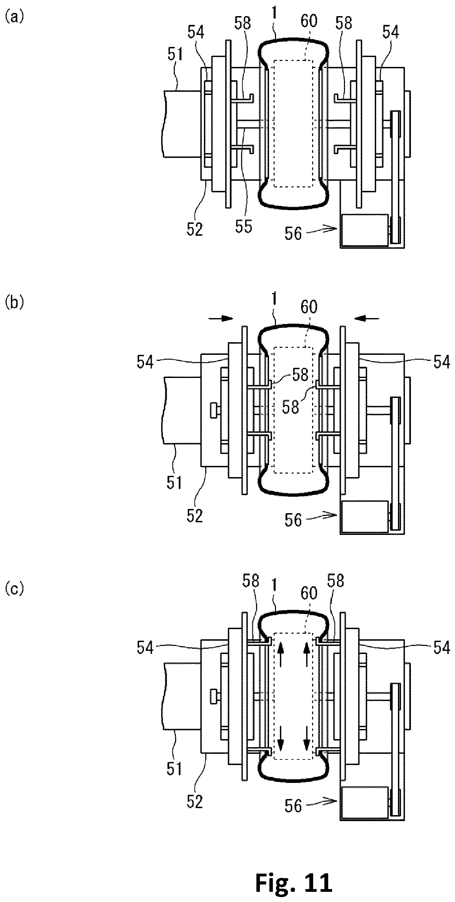

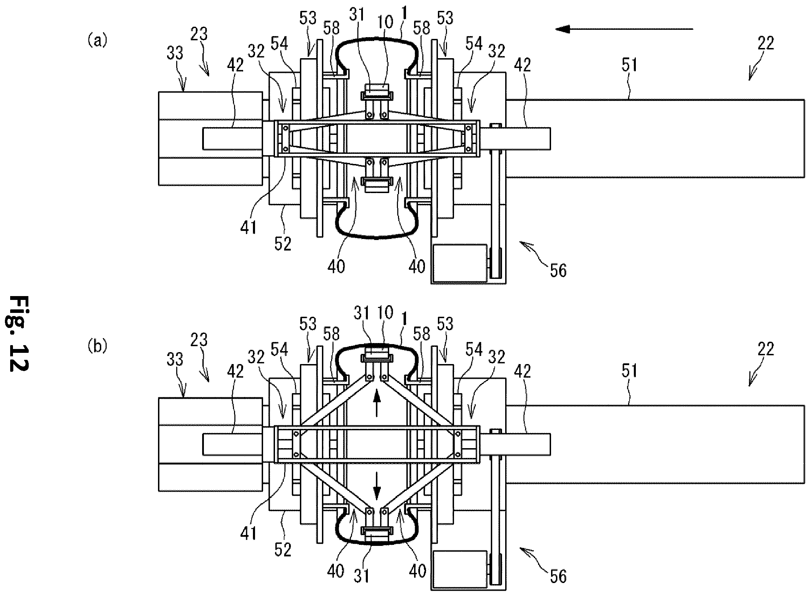

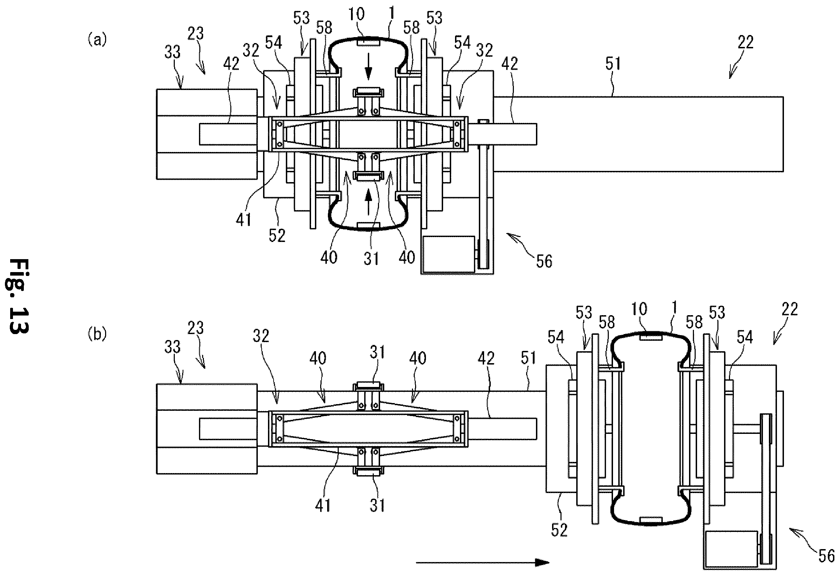

FIGS. 11(a) to 11(c) are explanatory diagrams as viewed from the upper surface side, showing a procedure for setting the tire 1 to the second supply device 22. FIGS. 12(a) and 12(b) and FIGS. 13(a) and 13(b) are explanatory diagrams as viewed from the upper surface side, showing a procedure for attaching the annular member 10 to the tire 1.

First, prior to attaching the annular member 10 to the tire 1, the tire 1 is set to the second supply device 22. Specifically, as shown in FIG. 2, the attaching system 20 includes a preparation table 25, provided in the vicinity of the second supply device 22, for preparing the tire 1 to which an adhesive is applied to the inner peripheral surface 1a. At a position A3 between the preparation table 25 and the second supply device 22, the worker carries the tire 1 from the preparation table 25 to the placement table 60 of the second supply device 22, and places the tire 1 on the placement table 60 (see FIG. 11(a)).

Next, as shown in FIG. 11(b), the pair of mobile bases 54 of the second supply device 22 move in the directions in which the mobile bases 54 come closer to each other, and the plurality of grasping members 58 are inserted into the inside of the tire 1. Thereafter, each grasping member 58 moves radially outward and grasps the tire 1.

Thereafter, as shown in FIG. 12(a), the movable frame 52 of the second supply device 22 moves toward the attaching device 23. At this time, the moving mechanism 32 and the holders 31 of the attaching device 23 are inserted into the openings 57a (see FIG. 10) formed in the grasping frames 57 of the grasping mechanism 53, and the annular member 10 held by the holders 31 is inserted into the inside of the tire 1.

Then, as shown in FIG. 12(b), the holders 31 move to the attaching position on the radially outer side by the moving mechanism 32 to attach the annular member 10 to the inner peripheral surface 1a of the tire 1.

After the annular member 10 is attached to the inner peripheral surface 1a of the tire 1, the holders 31 move to the first retraction position again by the moving mechanism 32 as shown in FIG. 13(a), and the movable frame 52 moves in a direction away from the attaching device 23 as shown in FIG. 13(b).

Thereafter, the grasping, of the tire 1 to which the annular member 10 is attached, by the grasping mechanism 53 is released, and the worker transports the tire 1 from the placement table 60 to the next process.

### (Specific Procedure)

Next, the procedure shown in FIG. 12(a) to FIG. 13(a) will be described in a more specific manner.

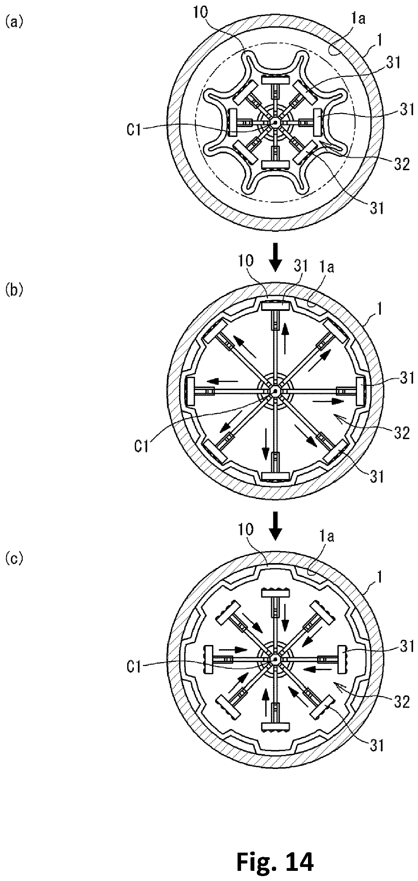

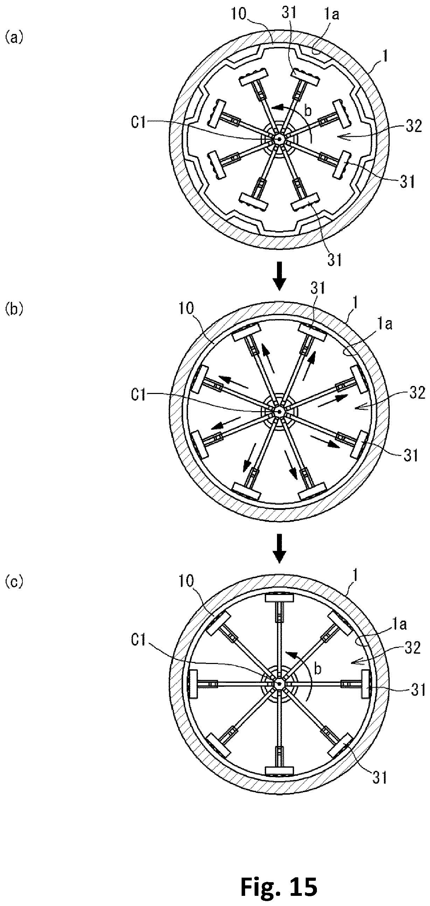

FIGS. 14(a) to 14(c) and FIGS. 15(a) to 15(c) are explanatory diagrams as viewed from the side surface side, showing the procedure for attaching the annular member 10 to the tire 1.

As shown in FIG. 14(a), after the attaching device 23 forms the annular member 10, the plurality of holders 31 move to the "first retraction position", thereby contracting the annular member 10 such that the annular member 10 is smaller than the inner diameter of the tire 1, so that the annular member 10 is brought into a state where it is possible to insert the annular member 10 into the inside of the tire 1.

As shown in FIG. 14(b), the attaching device 23 attaches the annular member 10 to the inner peripheral surface 1a of the tire 1 by moving the plurality of holders 31 to the "attaching position" on the radially outer side. At this time, only the portions, of the annular member 10, held by the holding member 36 are adhered to the inner peripheral surface 1a of the tire 1, and the other portions of the annular member 10 are separated from or slightly adhered to the inner peripheral surface 1a of the tire 1.

Next, the attaching device 23 releases the holding of the annular member 10 by the holders 31, and moves the holders 31 to the second retraction position as shown in FIG. 14(c). The second retraction position is located radially outward of the first retraction position at which the annular member 10 is inserted into the inside of the tire 1, and is a position away radially inward from the annular member 10 attached to the inner peripheral surface 1a of the tire 1. Therefore, the holders 31 can be moved with a shorter stroke than that in the case of moving the holders 31 to the first retraction position, so that the cycle time of the attaching work can be shortened.

Thereafter, as shown in FIG. 15(a), the attaching device 23 rotates the holders 31 in the direction of an arrow b by the rotating mechanism 33 to position the holders 31 on the radially inner side of the portions, of the annular member 10, which are not attached to the inner peripheral surface 1a of the tire 1. In the present embodiment, since the eight holders 31 are provided, the interval in the circumferential direction between the holders 31 is an angular interval of 22.5° about the axis C1. Thus, the attaching device 23 rotates each holder 31 about the axis C1 by 22.5°.

Thereafter, as shown in FIG. 15(b), the attaching device 23 moves the holders 31 radially outward by the moving mechanism 32 to cause each holder 31 to press the annular member 10 from the radially inner side, thereby attaching the annular member 10 to the inner peripheral surface 1a of the tire 1.

Next, as shown in FIG. 15(c), the attaching device 23 rotates each holder 31 in the direction of an arrow b about the axis C1 by the rotating mechanism 33. Accordingly, the first and second rollers 37a and 37b of the holder 31 run on the inner peripheral surface of the annular member 10 to press the annular member 10 against the inner peripheral surface 1a of the tire 1. Through the above operation, attaching of the annular member 10 to the inner peripheral surface 1a of the tire 1 is completed.

### [Modification of Tire 1]

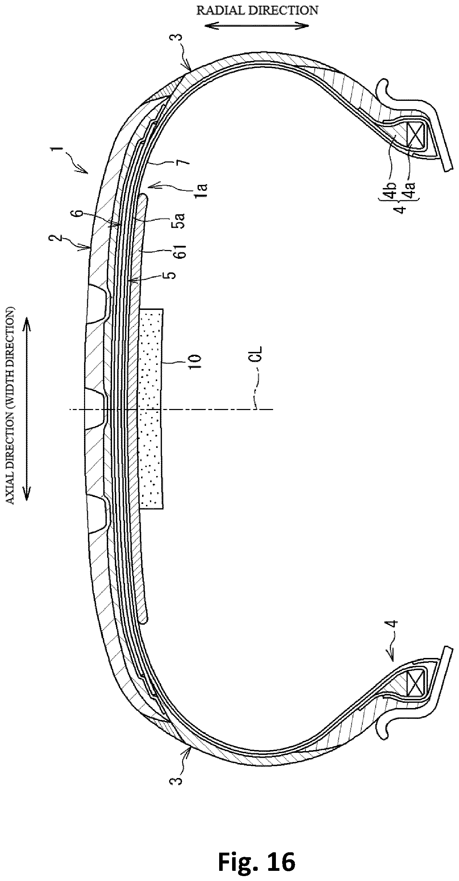

FIG. 16 is a cross-sectional view showing a modification of the tire 1.

In the tire 1 of this modification, a sealant material 61 is applied to the inner peripheral surface 1a. Since the sealant material 61 is provided on the inner peripheral surface 1a of the tire 1, the sealant material 61 closes a hole formed when a nail or the like pierces the tire 1 from the tread 2 side, thereby preventing a puncture. As the sealant material 61, a conventionally known material is used. For example, the sealant material 61 contains a rubber component, a liquid polymer, and a crosslinking agent, and has adhesiveness.

The annular member 10 is provided radially inward of the sealant material 61. The annular member 10 is directly attached to the sealant material 61 due to the adhesiveness of the sealant material 61. Therefore, the sealant material 61 serves as an adhesive for attaching the annular member 10 to the inner peripheral surface 1a of the tire 1.

### [Modifications of Holders 31]

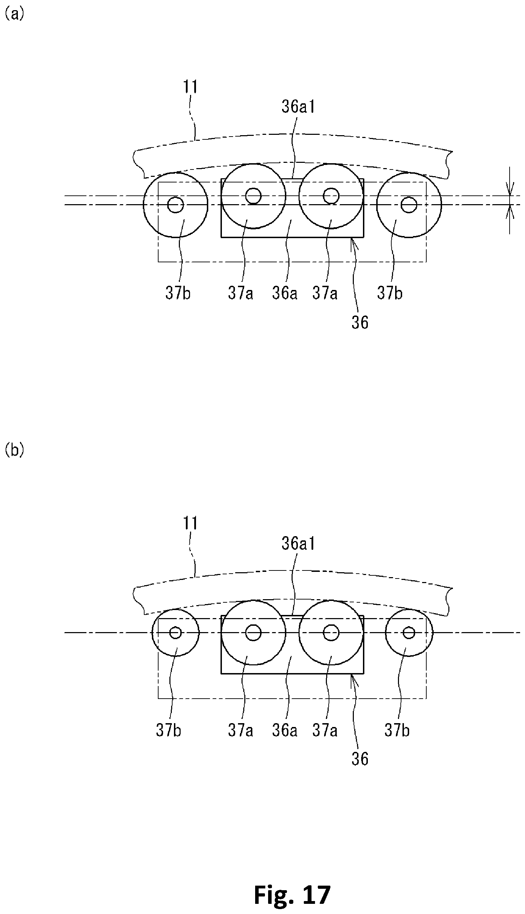

FIGS. 17(a) and 17(b) are schematic front views showing modifications of the holders 31.

In the modifications shown in FIGS. 17(a) and 17(b), the first rollers 37a are located so as to more greatly protrude from the holding surface 36a1 of the holding member 36 than the second rollers 37b. Specifically, in the example shown in FIG. 17(a), the position of the axis of each first roller 37a is located on the holding surface 36a1 side with respect to the position of the axis of each second roller 37b. In the example shown in FIG. 17(b), the axis of each first roller 37a and the axis of each second roller 37b are located on a straight line, but each second roller 37b is formed so as to have a diameter smaller than that of each first roller 37a.

Since the first rollers 37a more greatly protrude from the holding surface 36a1 than the second rollers 37b as described above, the first and second rollers 37a and 37b can be more easily located along the annular member 10 and the inner peripheral surface 1a of the tire 1 which are curved in an arc shape.

### [Effects of Embodiment]

(1) The attaching device 23 according to the above embodiment includes: the plurality of holders 31 which are disposed at intervals in the circumferential direction about the predetermined axis C1 and hold the inner peripheral surface of the annular member 10; the moving mechanism 32 which moves the plurality of holders 31 in the radial direction about the axis C1; the rotating mechanism 33 which moves the plurality of holders 31 in the circumferential direction; and the control device 24. The control device 24 controls the operation of the holders 31, the moving mechanism 32, and the rotating mechanism 33 so as to perform the following operations (a) to (f) of:
   (a) holding the inner peripheral surface of the annular member 10 by the holders 31;
   (b) moving the holders 31 holding the annular member 10, outwardly in the radial direction toward a predetermined attaching position to attach a part of the annular member 10 to the inner peripheral surface 1a of the tire 1;
   (c) releasing the holding of the annular member 10 by the holders 31;
   (d) moving the holders 31 to a retraction position which is located inward of the attaching position in the radial direction, to separate the holders 31 from the annular member 10;
   (e) moving the holders 31 in the circumferential direction; and
   (f) moving the holders 31 to the attaching position to attach another part of the annular member 10 to the inner peripheral surface 1a of the tire 1.

   Thus, the attaching device 23 attaches the part of the annular member 10 to the inner peripheral surface 1a of the tire 1 by the plurality of holders 31, separates the holders 31 from the annular member 10 once, shifts the positions in the circumferential direction of the holders 31, and attaches the other part of the annular member 10 to the inner peripheral surface 1a of the tire 1 again. Accordingly, substantially the entirety of the annular member 10 can be uniformly attached to the inner peripheral surface 1a of the tire 1 without occurrence of wrinkles in the annular member 10.
(2) The control device 24 according to the above embodiment controls the operation of the rotating mechanism 33 so as to move the holders 31 in the circumferential direction with the annular member 10 pressed against the inner peripheral surface 1a of the tire 1 by the holders 31 after the operation (f). Thus, the entire circumference of the annular member 10 can be attached to the inner peripheral surface 1a of the tire 1 without being separated therefrom.
(3) Each of the holders 31 includes the holding member 36 which holds the annular member 10, and the first and second rollers 37a and 37b which are capable of rolling on the inner peripheral surface of the annular member 10. Thus, when moving the holders 31 in the circumferential direction with the annular member 10 pressed against the inner peripheral surface 1a of the tire 1 by the holders 31, the first and second rollers 37a and 37b can roll on the inner peripheral surface of the annular member 10, thereby reducing the resistance to movement of the holders 31. Each holder 31 may include only either the first rollers 37a or the second rollers 37b.
(4) The retraction position of each holder 31 includes the first retraction position at which the annular member 10 held by the holders 31 is contracted to be smaller than the inner diameter of the tire 1, and the second retraction position which is located between the first retraction position and the attaching position in the radial direction and at which the holders 31 are separated from the annular member 10 attached to the inner peripheral surface 1a of the tire 1. Thus, the cycle time from the operation (b) of attaching the part of the annular member 10 to the inner peripheral surface 1a of the tire 1 to the operation (f) of attaching the other part of the annular member 10 to the inner peripheral surface 1a of the tire 1 again after moving the holders 31 in the circumferential direction can be shortened.
(5) The moving mechanism 32 includes the pair of link mechanisms 40 each including: the cylinder 42 which is disposed on the axis C1 and extends and contracts in the axial direction along the axis C1; and the link members 43 each of which is coupled at one end thereof to the cylinder 42 and coupled at another end thereof to the holder 31, and the pair of link mechanisms 40 are provided on both sides in the axial direction of the holders 31. Thus, the holders 31 can be moved in the radial direction by extension and contraction of the cylinders 42 without changing the positions in the axial direction of the holders 31, so that the holders 31 can be smoothly moved toward the inner peripheral surface 1a of the tire 1 when moving the holders 31 from the first retraction position to the attaching position.
(6) The attaching system 20 according to the above embodiment includes: the attaching device 23 which forms the long belt-shaped member 11 into the annular member 10 and attaches the annular member 10 to the inner peripheral surface 1a of the tire 1; the first supply device 21 which supplies the long belt-shaped member 11 to the attaching device 23; and the second supply device 22 which supplies the tire 1 to the attaching device 23. Thus, the work from forming the annular member 10 to attaching the annular member 10 to the tire 1 can be performed through one continuous operation.
(7) The attaching device 23 and the second supply device 22 are disposed adjacent to each other in the first direction X along the axial direction of the annular member 10 formed by the attaching device 23, and the attaching device 23 and the first supply device 21 are disposed adjacent to each other along the second direction Y orthogonal to the first direction X. In FIG. 2, the worker can perform the forming work and the attaching work of the annular member 10 while moving between a position A1 near the first supply device 21, a position A2 near the attaching device 23, and the position A3 near the second supply device 22, and the worker can smoothly move between the first supply device 21 and the attaching device 23 and between the attaching device 23 and the second supply device 22.
(8) The attaching method according to the above embodiment includes the following steps (a) to (f) of
   (a) holding the inner peripheral surface of the annular member 10 by the plurality of holders 31 disposed at intervals in the circumferential direction about the predetermined axis C1;
   (b) moving the holders 31 holding the annular member 10, in the radial direction about the axis C1 toward a predetermined attaching position to attach a part of the annular member 10 to the inner peripheral surface of the tire 1;
   (c) releasing the holding of the annular member 10 by the holders 31;
   (d) moving the holders 31 to a retraction position which is located inward of the attaching position in the radial direction, to separate the holders 31 from the annular member 10;
   (e) moving the holders 31 in the circumferential direction; and
   (f) moving the holders 31 to the attaching position to attach another part of the annular member 10 to the inner peripheral surface 1a of the tire 1.

   Thus, it is possible to attach the part of the annular member 10 to the inner peripheral surface 1a of the tire 1 by the plurality of holders 31, separate the holders 31 from the annular member 10 once, shift the positions in the circumferential direction of the holders 31, and attach the other part of the annular member 10 to the inner peripheral surface 1a of the tire 1 again. Accordingly, substantially the entirety of the annular member 10 can be uniformly attached to the inner peripheral surface 1a of the tire 1.
(9) The attaching method according to the above embodiment further includes a step of moving the holders 31 in the circumferential direction with the annular member 10 pressed against the inner peripheral surface 1a of the tire 1 by the holders 31 after the step (f). Thus, the entirety of the annular member 10 can be attached to the inner peripheral surface 1a of the tire 1 without being separated therefrom.
(10) The attaching method according to the above embodiment further includes a step of applying the sealant material 61 for adhering the annular member 10, to the inner peripheral surface 1a of the tire 1 before the step (b). Thus, the annular member 10 can be attached to the inner peripheral surface 1a of the tire 1 using the sealant material 61 for preventing a puncture in the tire 1 as an adhesive.
(11) The tire 1 according to the above embodiment (modification) includes: the sealant material 61 provided on the inner peripheral surface 1a; and the annular member 10 provided radially inward of the sealant material 61. Thus, the annular member 10 can be attached to the inner peripheral surface 1a of the tire 1 using the sealant material 61 for preventing a puncture in the tire 1 as an adhesive.
(12) The forming device (attaching device) 23 for the annular member 10 according to the above embodiment includes: the plurality of holders 31 which are disposed at intervals in the circumferential direction about the predetermined axis C1 and hold the long belt-shaped member 11; the rotating mechanism 33 which moves the plurality of holders 31 in the circumferential direction; and the control device 24 which controls the operation of the holders 31 and the rotating mechanism 33. The control device 24 controls the operation of the holders 31 and the rotating mechanism 33 so as to perform the following operations (a) to (c) of:
   (a) holding one end portion 11a in the longitudinal direction of the long belt-shaped member 11 by one holder 31;
   (b) moving the holders 31 in the circumferential direction to sequentially position the long belt-shaped member 11 on another holder 31 of the plurality of holders 31; and
   (c) holding the long belt-shaped member 11 positioned on the other holder 31, by the other holder 31.

   Thus, the long belt-shaped member 11 can be automatically formed into an annular shape by the plurality of holders 31, so that the burden on the worker can be reduced.
(13) In the above embodiment, in the operation (b), the holders 31 are temporarily stopped each time the long belt-shaped member 11 is positioned on the holder 31. Thus, the annular member 10 can be held by the holder 31 in a stable state.
(14) The forming device (attaching device) 23 according to the above embodiment further includes the pressing mechanism 34 which presses the long belt-shaped member 11 positioned on the holder 31, against the holder 31. Thus, the long belt-shaped member 11 is not separated from the holder 31, so that the long belt-shaped member 11 can be reliably held by the holder 31.
(15) In the long belt-shaped member 11 according to the above embodiment, as shown in FIGS. 9(a) to 9(c), the projection 11d is formed on one of one end portion and another end portion in the longitudinal direction, and the recess 11c to which the projection 11d is fitted is formed on the other of the one end portion and the other end portion. Thus, the joining strength between the one end portion and the other end portion of the long belt-shaped member 11 can be increased, and the annular member 10 can be reliably formed.
(16) The forming method for the annular member 10 according to the above embodiment includes the steps of:
   (a) holding one end portion 11a in the longitudinal direction of the long belt-shaped member 11 by one holder 31 located at the highest position among the plurality of holders 31 disposed at intervals in the circumferential direction about the predetermined axis C1;
   (b) moving the plurality of holders 31 in the circumferential direction to sequentially position the long belt-shaped member 11 on the plurality of holders 31; and
   (c) holding the long belt-shaped member 11 positioned on each holder 31, by the holder 31.

   Thus, the long belt-shaped member 11 can be automatically formed into an annular shape by the plurality of holders 31, so that the burden on the worker can be reduced.
(17) In the attaching method according to the above embodiment, in the step (b), the holders 31 are temporarily stopped each time the long belt-shaped member 11 is positioned on the holder 31. Thus, the long belt-shaped member 11 can be held by the holder 31 in a stable state.

Although the embodiment of the present invention has been described in detail above, the present invention is not limited to the above specific embodiment, but only by the appended claims.

The present invention can be applied to not only a sponge material for vibration isolation or sound absorption but also any annular member 10 that performs a predetermined function when being attached to the inner peripheral surface 1a of the tire 1.

## Claims

1. An attaching device (23) for an annular member (10), for attaching the annular member (10) to an inner peripheral surface (1a) of a tire (1), the attaching device (23) comprising:
a plurality of holders (31) disposed at intervals in a circumferential direction about a predetermined axis (C1) and configured to hold an inner peripheral surface of the annular member (10);
a moving mechanism (32) configured to move the plurality of holders (31) in a radial direction about the axis (C1);
a rotating mechanism (33) configured to move the plurality of holders (31) in the circumferential direction; and
a control device (24),
**characterized in that** the control device (24) controls operation of the holders (31), the moving mechanism (32), and the rotating mechanism (33) so as to perform the following operations (a) to (f) of:
(a) holding the inner peripheral surface of the annular member (10) by the holders (31);
(b) moving the holders (31) holding the annular member (10), outwardly in the radial direction toward a predetermined attaching position to attach a part of the annular member (10) to the inner peripheral surface (1a) of the tire (1);
(c) releasing the holding of the annular member (10) by the holders (31);
(d) moving the holders (31) to a retraction position which is located inward of the attaching position in the radial direction, to separate the holders (31) from the annular member (10);
(e) moving the holders (31) in the circumferential direction; and
(f) moving the holders (31) to the attaching position to attach another part of the annular member (10) to the inner peripheral surface (1a) of the tire (1).

2. The attaching device (23) for the annular member (10) according to claim 1, wherein the control device (24) controls the operation of the rotating mechanism (33) so as to move the holders (31) in the circumferential direction with the annular member (10) pressed against the inner peripheral surface (1a) of the tire (1) by the holders (31) after the operation (f).

3. The attaching device (23) for the annular member (10) according to claim 2, wherein each of the holders (31) includes a holding member (36) configured to hold the annular member (10), and a roller (37a, 37b) capable of rolling on the inner peripheral surface of the annular member (10).

4. The attaching device (23) for the annular member (10) according to any one of claims 1 to 3, wherein the retraction position includes a first retraction position at which the annular member (10) held by the holders (31) is contracted to be smaller than an inner diameter of the tire (1), and a second retraction position which is located between the first retraction position and the attaching position in the radial direction and at which the holders (31) are separated from the annular member (10) attached to the inner peripheral surface (1a) of the tire (1).

5. The attaching device (23) for the annular member (10) according to any one of claims 1 to 4, wherein
the moving mechanism (32) includes a pair of link mechanisms (40) each including: a cylinder (42) disposed on the axis (C1) and configured to extend and contract in an axial direction along the axis (C1); and link members (43) each coupled at one end thereof to the cylinder (42) and coupled at another end thereof to the holder (31), and
the pair of link mechanisms (40) are provided on both sides in the axial direction of the holders (31).

6. An attaching system (20) for an annular member (10), for attaching the annular member (10) to an inner peripheral surface (1a) of a tire (1), the attaching system (20) comprising:
an attaching device (23) according to any of claims 1 to 5 configured to form a long belt-shaped member (11) into the annular member (10) and attach the annular member (10) to the inner peripheral surface (1a) of the tire (1);
a first supply device (21) configured to supply the long belt-shaped member (11) to the attaching device (23); and
a second supply device (22) configured to supply the tire (1) to the attaching device (23).

7. The attaching system (20) for the annular member (10) according to claim 6, wherein
the attaching device (23) and the second supply device (22) are disposed adjacent to each other in a first direction (X) along an axial direction of the annular member (10) formed by the attaching device (23), and
the attaching device (23) and the first supply device (21) are disposed adjacent to each other along a second direction (Y) orthogonal to the first direction (X).

8. An attaching method for an annular member (10), for attaching the annular member (10) to an inner peripheral surface (1a) of a tire (1), the attaching method comprising the following steps (a) to (f) of:
(a) holding an inner peripheral surface of the annular member (10) by a plurality of holders (31) disposed at intervals in a circumferential direction about a predetermined axis (C1);
(b) moving the holders (31) holding the annular member (10), outwardly in a radial direction about the axis (C1) toward a predetermined attaching position to attach a part of the annular member (10) to the inner peripheral surface (1a) of the tire (1);
(c) releasing the holding of the annular member (10) by the holders (31);
(d) moving the holders (31) to a retraction position which is located inward of the attaching position in the radial direction, to separate the holders (31) from the annular member (10);
(e) moving the holders (31) in the circumferential direction; and
(f) moving the holders (31) to the attaching position to attach another part of the annular member (10) to the inner peripheral surface (1a) of the tire (1).

9. The attaching method for the annular member (10) according to claim 8, further comprising a step of moving the holders (31) in the circumferential direction with the annular member (10) pressed against the inner peripheral surface (1a) of the tire (1) by the holders (31) after the step (f).

10. The attaching method for the annular member (10) according to claim 9, further comprising a step of applying a sealant material (61) for adhering the annular member (10), to the inner peripheral surface (1a) of the tire (1) before the step (b).

## Patentansprüche

1. Anbringungsvorrichtung (23) für ein ringförmiges Element (10) zum Anbringen des ringförmigen Elements (10) an einer Innenumfangsfläche (1a) eines Reifens (1), wobei die Anbringungsvorrichtung (23) umfasst:
eine Vielzahl von Haltern (31), die in Abständen in einer Umfangsrichtung um eine vorbestimmte Achse (C1) angeordnet und so konfiguriert sind, dass sie eine Innenumfangsfläche des ringförmigen Elements (10) halten;
einen Bewegungsmechanismus (32), der so konfiguriert ist, dass er die Vielzahl von Haltern (31) in einer radialen Richtung um die Achse (C1) bewegt;
einen Drehmechanismus (33), der so konfiguriert ist, dass er die Vielzahl von Haltern (31) in der Umfangsrichtung bewegt; und
eine Steuervorrichtung (24),
**dadurch gekennzeichnet, dass** die Steuervorrichtung (24) den Betrieb der Halter (31), des Bewegungsmechanismus (32) und des Drehmechanismus (33) steuert, um die folgenden Vorgänge (a) bis (f) auszuführen:
(a) Halten der Innenumfangsfläche des ringförmigen Elements (10) durch die Halter (31);
(b) Bewegen der Halter (31), die das ringförmige Element (10) halten, nach außen in der radialen Richtung zu einer vorbestimmten Anbringungsposition hin, um einen Teil des ringförmigen Elements (10) an der Innenumfangsfläche (1a) des Reifens (1) anzubringen;
(c) Lösen des Haltens des ringförmigen Elements (10) durch die Halter (31);
(d) Bewegen der Halter (31) in eine Rückzugsposition, die sich in der radialen Richtung innen von der Anbringungsposition befindet, um die Halter (31) von dem ringförmigen Element (10) zu trennen;
(e) Bewegen der Halter (31) in der Umfangsrichtung; und
(f) Bewegen der Halter (31) in die Anbringungsposition, um einen anderen Teil des ringförmigen Elements (10) an der Innenumfangsfläche (1a) des Reifens (1) anzubringen.

2. Anbringungsvorrichtung (23) für das ringförmige Element (10) nach Anspruch 1, wobei die Steuervorrichtung (24) den Betrieb des Drehmechanismus (33) so steuert, dass die Halter (31) in der Umfangsrichtung bewegt werden, wobei das ringförmige Element (10) durch die Halter (31) gegen die Innenumfangsfläche (1a) des Reifens (1) gedrückt wird, nach dem Vorgang (f).

3. Anbringungsvorrichtung (23) für das ringförmige Element (10) nach Anspruch 2, wobei jeder der Halter (31) ein Halteelement (36) umfasst, das so konfiguriert ist, dass es das ringförmige Element (10) hält, und eine Rolle (37a, 37b), die in der Lage ist, auf der Innenumfangsfläche des ringförmigen Elements (10) zu rollen.

4. Anbringungsvorrichtung (23) für das ringförmige Element (10) nach einem der Ansprüche 1 bis 3, wobei die Rückzugsposition eine erste Rückzugsposition umfasst, in der das von den Haltern (31) gehaltene ringförmige Element (10) zusammengezogen wird, so dass es kleiner als ein Innendurchmesser des Reifens (1) ist, und eine zweite Rückzugsposition, die in der radialen Richtung zwischen der ersten Rückzugsposition und der Anbringungsposition liegt und in der die Halter (31) von dem an der Innenumfangsfläche (1a) des Reifens (1) angebrachten ringförmigen Element (10) getrennt sind.

5. Anbringungsvorrichtung (23) für das ringförmige Element (10) nach einem der Ansprüche 1 bis 4, wobei
der Bewegungsmechanismus (32) ein Paar Verbindungsmechanismen (40) umfasst, die jeweils umfassen: einen Zylinder (42), der auf der Achse (C1) angeordnet und so konfiguriert ist, dass er sich in einer axialen Richtung entlang der Achse (C1) ausdehnt und zusammenzieht; und Verbindungselemente (43), die jeweils an ihrem einen Ende mit dem Zylinder (42) und an ihrem anderen Ende mit dem Halter (31) verbunden sind, und
das Paar Verbindungsmechanismen (40) auf beiden Seiten in der axialen Richtung der Halter (31) vorgesehen ist.

6. Anbringungssystem (20) für ein ringförmiges Element (10) zum Anbringen des ringförmigen Elements (10) an einer Innenumfangsfläche (1a) eines Reifens (1), wobei das Anbringungssystem (20) umfasst:
eine Anbringungsvorrichtung (23) nach einem der Ansprüche 1 bis 5, die so konfiguriert ist, dass sie ein langes bandförmiges Element (11) in das ringförmige Element (10) einformt und das ringförmige Element (10) an der Innenumfangsfläche (1a) des Reifens (1) anbringt;
eine erste Zuführungsvorrichtung (21), die so konfiguriert ist, dass sie das lange bandförmige Element (11) der Anbringungsvorrichtung (23) zuführt; und
eine zweite Zuführungsvorrichtung (22), die so konfiguriert ist, dass sie den Reifen (1) der Anbringungsvorrichtung (23) zuführt.

7. Anbringungssystem (20) für das ringförmige Element (10) nach Anspruch 6,
wobei die Anbringungsvorrichtung (23) und die zweite Zuführungsvorrichtung (22) in einer ersten Richtung (X) entlang einer axialen Richtung des durch die Anbringungsvorrichtung (23) gebildeten ringförmigen Elements (10) benachbart zueinander angeordnet sind, und
die Anbringungsvorrichtung (23) und die erste Zuführungsvorrichtung (21) benachbart zueinander entlang einer zweiten Richtung (Y), die senkrecht zur ersten Richtung (X) ist, angeordnet sind.

8. Anbringungsverfahren für ein ringförmiges Element (10) zum Anbringen des ringförmigen Elements (10) an einer Innenumfangsfläche (1a) eines Reifens (1), wobei das Anbringungsverfahren die folgenden Schritte (a) bis (f) umfasst:
(a) Halten einer Innenumfangsfläche des ringförmigen Elements (10) durch eine Vielzahl von Haltern (31), die in Abständen in einer Umfangsrichtung um eine vorbestimmte Achse (C1) angeordnet sind;
(b) Bewegen der Halter (31), die das ringförmige Element (10) halten, nach außen in einer radialen Richtung um die Achse (C1) zu einer vorbestimmten Anbringungsposition hin, um einen Teil des ringförmigen Elements (10) an der Innenumfangsfläche (1a) des Reifens (1) anzubringen;
(c) Lösen des Haltens des ringförmigen Elements (10) durch die Halter (31);
(d) Bewegen der Halter (31) in eine Rückzugsposition, die sich in der radialen Richtung innen von der Anbringungsposition befindet, um die Halter (31) von dem ringförmigen Element (10) zu trennen;
(e) Bewegen der Halter (31) in der Umfangsrichtung; und
(f) Bewegen der Halter (31) in die Anbringungsposition, um einen anderen Teil des ringförmigen Elements (10) an der Innenumfangsfläche (1a) des Reifens (1) anzubringen.

9. Anbringungsverfahren für das ringförmige Element (10) nach Anspruch 8, ferner umfassend einen Schritt eines Bewegens der Halter (31) in der Umfangsrichtung, wobei das ringförmige Element (10) durch die Halter (31) gegen die Innenumfangsfläche (1a) des Reifens (1) gedrückt wird, nach dem Schritt (f).

10. Anbringungsverfahren für das ringförmige Element (10) nach Anspruch 9, ferner umfassend einen Schritt eines Auftragens eines Dichtungsmaterials (61) zum Ankleben des ringförmigen Elements (10) auf die Innenumfangsfläche (1a) des Reifens (1) vor dem Schritt (b).

## Revendications

1. Dispositif de fixation (23) pour un élément annulaire (10), destiné à fixer l'élément annulaire (10) sur une surface périphérique intérieure (1a) d'un pneumatique (1), le dispositif de fixation (23) comprenant :
une pluralité de moyens de maintien (31) disposés à des intervalles dans une direction circonférentielle autour d'un axe prédéterminé (C1) et configurés pour maintenir une surface périphérique intérieure de l'élément annulaire (10) ;
un mécanisme de déplacement (32) configuré pour déplacer la pluralité de moyens de maintien (31) dans une direction radiale autour de l'axe (C1) ;
un mécanisme de rotation (33) configuré pour déplacer la pluralité de moyens de maintien (31) dans la direction circonférentielle ; et
un dispositif de commande (24),
**caractérisé en ce que** le dispositif de commande (24) commande un actionnement des moyens de maintien (31), du mécanisme de déplacement (32) et du mécanisme de rotation (33) de manière à effectuer les opérations (a) à (f) suivantes consistant à :
(a) maintenir la surface périphérique intérieure de l'élément annulaire (10) au moyen des moyens de maintien (31) ;
(b) déplacer les moyens de maintien (31) maintenant l'élément annulaire (10) vers l'extérieur dans la direction radiale vers une position de fixation prédéterminée pour fixer une partie de l'élément annulaire (10) sur la surface périphérique intérieure (1a) du pneumatique (1) ;
(c) libérer le maintien de l'élément annulaire (10) par les moyens de maintien (31) ;
(d) déplacer les moyens de maintien (31) jusqu'à une position de rétraction qui est située à l'intérieur de la position de fixation dans la direction radiale, pour séparer les moyens de maintien (31) de l'élément annulaire (10) ;
(e) déplacer les moyens de maintien (31) dans la direction circonférentielle ; et
(f) déplacer les moyens de maintien (31) jusqu'à la position de fixation pour attacher une autre partie de l'élément annulaire (10) sur la surface périphérique intérieure (1a) du pneumatique (1).

2. Dispositif de fixation (23) pour l'élément annulaire (10) selon la revendication 1, dans lequel le dispositif de commande (24) commande l'actionnement du mécanisme de rotation (33) de manière à déplacer les moyens de maintien (31) dans la direction circonférentielle avec l'élément annulaire (10) pressé contre la surface périphérique intérieure (1a) du pneumatique (1) au moyen des moyens de maintien (31) après l'opération (f).

3. Dispositif de fixation (23) pour l'élément annulaire (10) selon la revendication 2, dans lequel chacun des moyens de maintien (31) inclut un élément de maintien (36) configuré pour maintenir l'élément annulaire (10), et un rouleau (37a, 37b) capable de rouler sur la surface périphérique intérieure de l'élément annulaire (10).

4. Dispositif de fixation (23) pour l'élément annulaire (10) selon l'une quelconque des revendications 1 à 3, dans lequel la position de rétraction inclut une première position de rétraction à laquelle l'élément annulaire (10) maintenu par les moyens de maintien (31) est contracté pour être plus petit qu'un diamètre intérieur du pneumatique (1), et une seconde position de rétraction qui est située entre la première position de rétraction et la position de fixation dans la direction radiale et à laquelle les moyens de maintien (31) sont séparés de l'élément annulaire (10) fixé sur la surface périphérique intérieure (1a) du pneumatique (1).

5. Dispositif de fixation (23) pour l'élément annulaire (10) selon l'une quelconque des revendications 1 à 4, dans lequel
le mécanisme de déplacement (32) inclut une paire de mécanismes à tringles (40) incluant chacun : un vérin (42) disposé sur l'axe (C1) et configuré pour s'étendre et se contracter dans une direction axiale le long de l'axe (C1) ; et des éléments formant tringles (43) chacun couplés, à une extrémité de celui-ci, au vérin (42) et couplés, à une autre extrémité de celui-ci, au moyen de maintien (31), et
la paire de mécanisme à tringles (40) sont prévus sur les deux côtés dans la direction axiale des moyens de maintien (31).

6. Système de fixation (20) pour un élément annulaire (10), destiné à fixer l'élément annulaire (10) sur une surface périphérique intérieure (1a) d'un pneumatique (1), le système de fixation (20) comprenant :
un dispositif de fixation (23) selon l'une quelconque des revendications 1 à 5 configuré pour former un élément long en forme de ceinture (11) jusque dans l'élément annulaire (10) et pour fixer l'élément annulaire (10) sur la surface périphérique intérieure (1a) du pneumatique (1) ;
un premier dispositif d'alimentation (21) configuré pour alimenter l'élément long en forme de ceinture (11) au dispositif de fixation (23) ; et
un second dispositif d'alimentation (22) configuré pour alimenter le pneumatique (1) au dispositif de fixation (23).

7. Système de fixation (20) pour l'élément annulaire (10) selon la revendication 6, dans lequel
le dispositif de fixation (23) et le second dispositif d'alimentation (22) sont disposés de manière adjacente l'un à l'autre dans une première direction (X) le long d'une direction axiale de l'élément annulaire (10) formée par le dispositif de fixation (23), et
le dispositif de fixation (23) et le premier dispositif d'alimentation (21) sont disposés de manière adjacente l'un à l'autre le long d'une seconde direction (Y) orthogonale à la première direction (X).

8. Procédé de fixation pour un élément annulaire (10), pour fixer l'élément annulaire (10) sur une surface périphérique intérieure (1a) d'un pneumatique (1), le dispositif de fixation comprenant les étapes (a) à (f) suivantes consistant à :
(a) maintenir une surface périphérique intérieure de l'élément annulaire (10) au moyen d'une pluralité de moyens de maintien (31) disposés à des intervalles dans une direction circonférentielle autour d'un axe prédéterminé (C1) ;
(b) déplacer les moyens de maintien (31) maintenant l'élément annulaire (10) vers l'extérieur dans la direction radiale autour de l'axe (C1) vers une position de fixation prédéterminée pour fixer une partie de l'élément annulaire (10) sur la surface périphérique intérieure (1a) du pneumatique (1) ;
(c) libérer le maintien de l'élément annulaire (10) par les moyens de maintien (31) ;
(d) déplacer les moyens de maintien (31) jusqu'à une position de rétraction qui est située à l'intérieur de la position de fixation dans la direction radiale, pour séparer les moyens de maintien (31) de l'élément annulaire (10) ;
(e) déplacer les moyens de maintien (31) dans la direction circonférentielle ; et
(f) déplacer les moyens de maintien (31) jusqu'à la position de fixation pour attacher une autre partie de l'élément annulaire (10) sur la surface périphérique intérieure (1a) du pneumatique (1).

9. Procédé de fixation pour l'élément annulaire (10) selon la revendication 8, comprenant en outre une étape consistant à déplacer les moyens de maintien (31) dans la direction circonférentielle avec l'élément annulaire (10) pressé contre la surface périphérique intérieure (1a) du pneumatique (1) au moyen des moyens de maintien (31) après l'étape (f).

10. Procédé de fixation pour l'élément annulaire (10) selon la revendication 9, comprenant en outre une étape consistant à appliquer un matériau d'étanchéité (61) destiné à faire adhérer l'élément annulaire (10), sur la surface périphérique intérieure (1a) du pneumatique (1) avant l'étape (b).
